# FASCICULE DE BREVET EUROPEEN

(11) **EP 1 191 259 B1**
(45) Date de publication et mention de la délivrance du brevet: **26.11.2003**
(21) Numéro de dépôt: 01402358.4
(22) Date de dépôt: 13.09.2001
(51) Int. Cl.: F16H 57/04, B64C 29/02

(54) **Dispositif de lubrification d'une boîte de transmission de puissance présentant une orientation variable, en particulier pour un aéronef convertible à rotors basculants**
Schmiereinrichtung eines in unterschiedlicher Orientierung ausrichtbaren Leistungsgetriebes, insbesondere für schwenkbare Rotoren eines Flugzeuges
Lubrication device of a variable orientable power transmission especially for convertible plane with tilt rotors

(30) Priorité: 25.09.2000 FR 0012154
(43) Date de publication de la demande: 27.03.2002
(73) Titulaire: EUROCOPTER, 13725 Marignane Cédex (FR)
(72) Inventeur: Blanc, Maurice, 13510 Eguilles (FR); Thomassey, Lionel, 13270 Fos sur Mer (FR)
(74) Mandataire: Hauer, Bernard

(56) Documents cités:
- DE-A- 1 903 069
- US-A- 3 075 690
- US-A- 4 099 687

## Description

La présente invention concerne un dispositif de lubrification d'une boîte de transmission de puissance présentant une orientation variable, en particulier pour un aéronef convertible à rotors basculants, selon les caractéristiques mentionnées dans le préambule de la revendication 1 et bien connues dans ce domaine technique.

Généralement, le dispositif de lubrification d'une boîte de transmission comporte, notamment :
- des moyens de lubrification, par exemple des pompes, qui fournissent du lubrifiant à au moins un élément à lubrifier (engrenage, palier, ...) de ladite boîte de transmission ; et
- un réservoir de récupération qui récupère le lubrifiant de ladite boîte de transmission.

On sait que, pour une boîte de transmission usuelle présentant une orientation constante au cours du temps par rapport aux éléments et à la structure autour d'elle, par exemple la boîte de transmission principale d'un hélicoptère, le retour du lubrifiant en direction du réservoir de récupération est généralement réalisé sans moyen particulier, par un simple effet de gravité, le lubrifiant ruisselant le long des parois de la boîte de transmission et étant directement récupéré par ledit réservoir, dont une entrée est prévue dans la partie la plus basse de la boîte de transmission.

Bien entendu, un tel mode de récupération est uniquement possible lorsque la boîte de transmission présente une orientation stable de sorte que l'entrée du réservoir est alors toujours située verticalement en bas de la boîte de transmission, au niveau de la zone où s'accumule le lubrifiant.

En revanche, lorsque l'orientation de la boîte de transmission varie, la zone d'accumulation du lubrifiant dans la boîte de transmission varie également et tend à s'écarter de l'entrée du réservoir de récupération de sorte que ce mode de récupération n'est alors plus approprié.

C'est pourquoi il est nécessaire de prévoir des moyens de récupération spécifiques sur les boîtes de transmission à orientation variable, telles qu'une boîte de transmission principale d'un aéronef du type convertible à rotors basculants. Sur un tel aéronef qui décolle à la verticale à la façon d'un hélicoptère, les rotors fonctionnant alors comme voilure tournante, et qui effectue le vol de croisière à la façon d'un avion, les rotors fonctionnant dans ce cas comme hélices, on prévoit généralement pour la transmission de la puissance entre chaque rotor et le moteur qui lui est associé, un système de transmission comportant un ensemble réducteur basculant :
- qui est réalisé sous forme d'une boîte de transmission ;
- qui est relié à un ensemble réducteur non-basculant lié à un arbre dudit moteur ; et
- qui assure l'entraînement dudit rotor.

Généralement, on utilise comme moyen de récupération spécifique une pompe qui pompe le lubrifiant d'une zone d'accumulation vers le réservoir de lubrification. Comme, dans ce cas (boîte de transmission à orientation variable), il existe au moins deux zones d'accumulation différentes, il est nécessaire de prévoir au moins deux pompes par système de transmission (une pour le mode avion et une pour le mode hélicoptère, sur un aéronef convertible), ce qui entraîne une augmentation importante de la masse et une réduction de la fiabilité.

De plus, un tel système de transmission est complexe et sa maintenance est difficile.

Par ailleurs, on sait que les pompes usuelles qui sont, par exemple, utilisées sur les boîtes de transmission d'un hélicoptère, ne peuvent pas fonctionner à vide sous peine de dégradation. C'est pourquoi l'utilisation de telles pompes sur un aéronef convertible pose un grave problème de fiabilité, puisque dans certaines configurations de vol telles que le mode hélicoptère par exemple, les pompes prévues pour la vidange en mode avion ne sont pas alimentées en lubrifiant ou seulement par intermittence.

La présente invention a pour objet de remédier à ces inconvénients. Elle concerne un dispositif de lubrification simple, léger et fiable d'une boîte de transmission de puissance présentant une orientation variable, en particulier d'un aéronef convertible-à rotor(s) basculant(s).

A cet effet, selon l'invention, ledit dispositif de lubrification du type comportant :
- des moyens de lubrification pour fournir du lubrifiant à au moins un élément à lubrifier de ladite boîte de transmission comprenant un espace fermé ; et
- un réservoir de récupération pour récupérer du lubrifiant dudit espace fermé,
est remarquable en ce qu'il comporte de plus :
- au moins une vis de vidange rotative, qui est réalisée sous forme d'une vis d'Archimède pourvue d'une pluralité d'orifices et qui est agencée dans ledit espace fermé, pour amener du lubrifiant dudit espace fermé vers ledit réservoir de récupération ; et
- des moyens d'entraînement pour entraîner en rotation ladite vis de vidange,
et en ce que lesdits orifices sont pratiqués dans la vis de vidange selon un agencement tel que ladite vis de vidange puisse récupérer du lubrifiant dudit espace fermé, quelle que soit l'orientation de ladite boîte de transmission.

Ainsi, comme on utilise simplement une vis d'Archimède pour récupérer le lubrifiant, la réalisation et la maintenance dudit dispositif de lubrification sont simplifiées et sa masse, ainsi que son encombrement sont réduits.

De plus, à la différence des solutions précitées, la vis d'Archimède qui comprend, de façon connue, une hélice tournant autour de son axe dans une goulotte et assurant le déplacement du lubrifiant, peut fonctionner sans lubrifiant, avec un mélange air/huile, et ceci sans risque de cavitation.

En outre, grâce à l'invention, on peut utiliser un système de transmission de mouvement et de guidage en rotation de la vis de vidange, qui est très simple. En particulier :
- la prise de mouvement de la vis de vidange (sur les moyens d'entraînement) peut être réalisée par l'intermédiaire d'une courroie ou d'une chaîne. De préférence, toutefois, elle est réalisée par l'intermédiaire d'engrenages en matériau synthétique, qui présentent l'avantage d'être légers ; et
- le guidage peut être réalisé par des paliers au lieu de roulements.

Par ailleurs, de façon avantageuse, ladite vis de vidange est réalisée, au moins partiellement, en matériau synthétique, ce qui permet de réduire davantage encore la masse, ainsi que l'usure.

La présente invention concerne également un système de transmission pour la transmission de puissance entre un moteur d'entraînement et un rotor basculant, qui est susceptible de basculer entre une première position, dans laquelle il est susceptible de fonctionner comme voilure tournante, et une seconde position, dans laquelle il est susceptible de fonctionner comme hélice, ledit système de transmission comportant un ensemble réducteur basculant :
- qui est réalisé sous forme d'une boîte de transmission ;
- qui est relié à un ensemble réducteur non-basculant lié à un arbre dudit moteur ; et
- qui assure l'entraînement dudit rotor,

Selon l'invention, ce système de transmission est remarquable en ce que ladite boîte de transmission de l'ensemble réducteur basculant comporte au moins un dispositif de lubrification tel que celui précité et conforme à l'invention.

Par ailleurs, la présente invention concerne également un aéronef convertible à rotors basculants, pouvant fonctionner en mode avion et en mode hélicoptère, et comprenant au moins un fuselage, une voilure fixe comportant au moins deux ailes s'étendant latéralement de part et d'autre dudit fuselage, et, en mode hélicoptère, une voilure tournante comportant au moins deux rotors qui servent d'hélices en mode avion, et dont chacun est monté basculant sur une aile fixe respective et est relié, par un système de transmission respectif, à un moteur respectif supporté par l'aile correspondante. Selon l'invention, au moins l'un desdits systèmes de transmission est tel que celui précité conforme à l'invention.

Les figures du dessin annexé feront bien comprendre comment l'invention peut être réalisée. Sur ces figures, des références identiques désignent des éléments semblables.

La figure 1 illustre schématiquement un dispositif de lubrification conforme à l'invention.

La figure 2 illustre schématiquement l'agencement d'une vis d'Archimède dans une boîte de transmission principale d'un rotor.

Les figures 3 et 4 sont des vues schématiques en perspective d'un aéronef convertible, respectivement en mode avion et en mode hélicoptère.

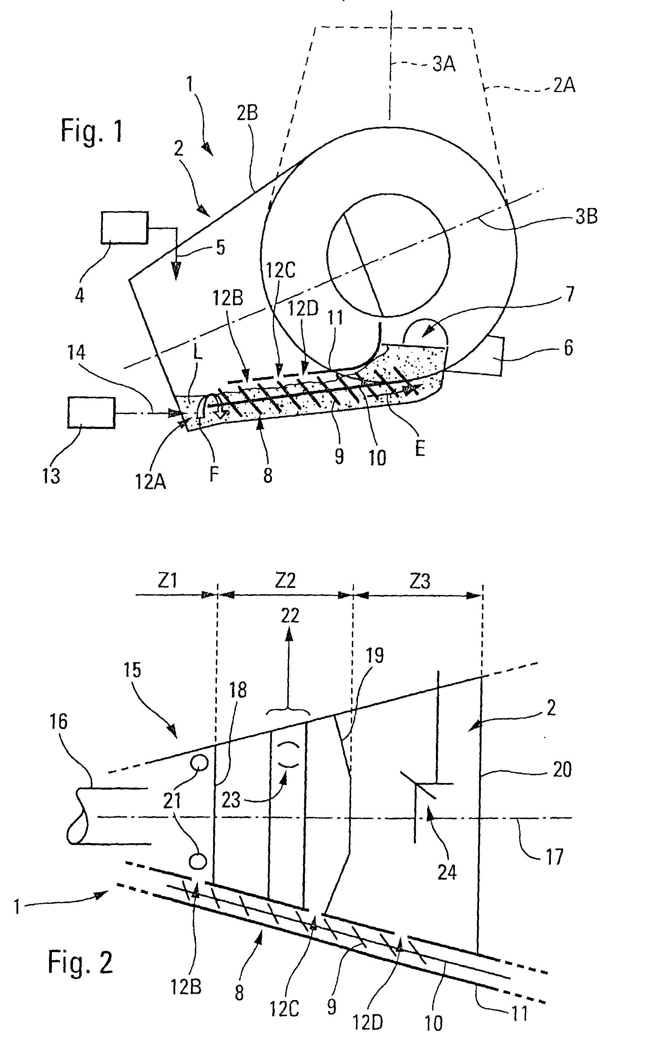

Le dispositif de lubrification 1 conforme à l'invention et représenté schématiquement sur la figure 1 est destiné à lubrifier une boîte de transmission de puissance 2 qui présente une orientation variable, c'est-à-dire qui peut prendre successivement au moins deux orientations ou positions différentes, à savoir par exemple :
- une position "verticale" 2A représentée en traits interrompus sur la figure 1, pour laquelle l'axe longitudinal de la boîte de transmission 2 est disposé selon un axe 3A ; et
- une position "inclinée" 2B représentée en trait continu, pour laquelle ledit axe longitudinal est disposé selon un axe 3B différent de l'axe 3A.

Ledit dispositif de lubrification 1 est du type connu comportant :
- des moyens de lubrification 4 usuels, de préférence des pompes de lubrification, qui fournissent du lubrifiant, comme illustré par une flèche 5, à au moins un élément non représenté à lubrifier, par exemple un engrenage ou un palier, de ladite boîte de transmission 2 ; et
- un réservoir de récupération 6 pour récupérer du lubrifiant de ladite boîte de transmission 2 qui comprend un espace fermé. Ledit lubrifiant pénètre à travers une ouverture d'entrée 7 dans ledit réservoir 6.

Généralement, les moyens de lubrification 4 sont alimentés en lubrifiant à partir dudit réservoir de récupération 6. Toutefois, il est également envisageable que lesdits moyens de lubrification 4 soient alimentés à partir d'un autre réservoir non représenté.

Selon l'invention, ledit dispositif de lubrification 1 comporte de plus :
- au moins une vis de vidange 8 qui est réalisée sous forme d'une vis d'Archimède. Cette vis de vidange 8 :
   . comporte une hélice rotative 9 qui tourne autour de son axe 10 dans une goulotte 11 et assure le déplacement du lubrifiant L, dans le sens illustré par une flèche E ;
   . est agencée dans la boîte de transmission 2 de manière à amener le lubrifiant L dans le réservoir de récupération 6, via l'ouverture 7 ; et
   . est pourvue d'une pluralité d'ouvertures (ou orifices) 12A, 12B, 12C, 12D qui sont pratiquées selon un agencement tel que ladite vis de vidange 8 puisse récupérer du lubrifiant L de la boîte de transmission 2, quelle que soit l'orientation ou la position 2A, 2B de cette dernière. Dans la position 2B représentée sur la figure 1, le lubrifiant L pénètre essentiellement par l'ouverture 12A dans la goulotte 11 ; et
- des moyens d'entraînement 13 pour entraîner la vis 8 en rotation, comme illustré par une flèche F. Ces moyens d'entraînement 13 peuvent être des moyens d'entraînement usuels spécifiques à la présente invention, tels qu'un moteur électrique par exemple. De préférence, toutefois, il s'agit d'organes mobiles, par exemple un arbre de puissance, de ladite boîte de transmission 2 ou d'un élément agencé à proximité de cette dernière.

Ainsi, grâce à l'invention, on obtient un dispositif de lubrification 1, de réalisation simple, et dont :
- la maintenance est facilitée et simplifiée ;
- la masse et l'encombrement sont réduits ; et
- la fiabilité est accrue.

Selon l'invention, la prise de mouvement sur les moyens d'entraînement 13, illustrée par une liaison 14, peut être mise en oeuvre par une courroie ou une chaîne. De préférence, toutefois, on utilise des engrenages en matériau synthétique, ce qui permet de réduire la masse et l'usure.

Pour réduire davantage encore la masse du dispositif de lubrification 1, on peut également fabriquer la vis de vidange 8 au moins en partie, en particulier son hélice 9, en matériau synthétique, ce qui permet de plus de réduire l'usure.

En outre, le guidage en rotation de l'hélice 9 peut être réalisé de façon avantageuse au moyen de paliers non représentés, à la place de roulements.

On notera que, lorsque la boîte de transmission 2 se trouve dans la position verticale 2A, le lubrifiant peut être récupéré, au moins en partie, directement par effet de gravité, puisque l'ouverture 7 d'entrée dans le réservoir de récupération 6 se trouve alors dans la zone d'accumulation du lubrifiant.

Sur la figure 2, on a représenté schématiquement et partiellement un mode de réalisation préféré d'un système de transmission de puissance 15 conforme à l'invention et comprenant la boîte de transmission 2 qui est associée à un rotor, dont on a partiellement représenté le mât 16 d'axe 17, de préférence un rotor basculant. Ledit système de transmission 15 assure ainsi la transmission de la puissance entre un moteur d'entraînement usuel non représenté et ledit rotor.

La boîte de transmission 2 est divisée, comme illustré sur la figure 2, en zones Z1, Z2 et Z3 qui sont séparées par des parois 18, 19 et 20 de séparation de zones.

Lesdites zones Z1, Z2 et Z3 comportent des éléments à lubrifier, en particulier respectivement :
- des roulements 21 du mât 16 du rotor ;
- un train épicycloïdal 22 comprenant notamment des satellites 23 ; et
- un couple spiro-conique 24.

La vis d'Archimède 8 comporte au moins un orifice 12B, 12C, 12D, en regard de chacune desdites zones Z1 à Z3.

Par exemple, l'orifice 12B récupère du lubrifiant de la zone Z1, ce qui empêche ce lubrifiant qui est éventuellement pollué (limaille, ...) de pénétrer dans la zone Z2. Il en est de même de l'orifice 12C associé à la zone Z2 et de l'orifice 12D associé à la zone Z3.

Les orifices 12A à 12D prévus sur la vis de vidange 8 peuvent être munis de bouchons magnétiques usuels, non représentés, destinés à récupérer des impuretés métalliques présentes dans le lubrifiant.

Dans le cadre de la présente invention, la boîte de transmission 2 à orientation variable, dont le dispositif de lubrification 1 assure la lubrification, peut basculer soit totalement, soit partiellement.

De préférence, le système de transmission 15 conforme à l'invention et représenté partiellement sur la figure 2 est destiné à la transmission de puissance entre un moteur d'entraînement et un rotor basculant de type connu, qui est susceptible de basculer entre une première position, dans laquelle il est susceptible de fonctionner comme voilure tournante, et une seconde position, dans laquelle il est susceptible de fonctionner comme hélice. Ledit système de transmission 15 comporte alors un ensemble réducteur basculant :
- qui correspond à ladite boîte de transmission de puissance 2 ;
- qui est relié à un ensemble réducteur non-basculant non représenté et lié à un arbre dudit moteur d'entraînement, le mouvement dudit moteur d'entraînement étant transmis audit ensemble réducteur basculant par l'intermédiaire dudit ensemble réducteur non-basculant ; et
- qui assure l'entraînement dudit rotor.

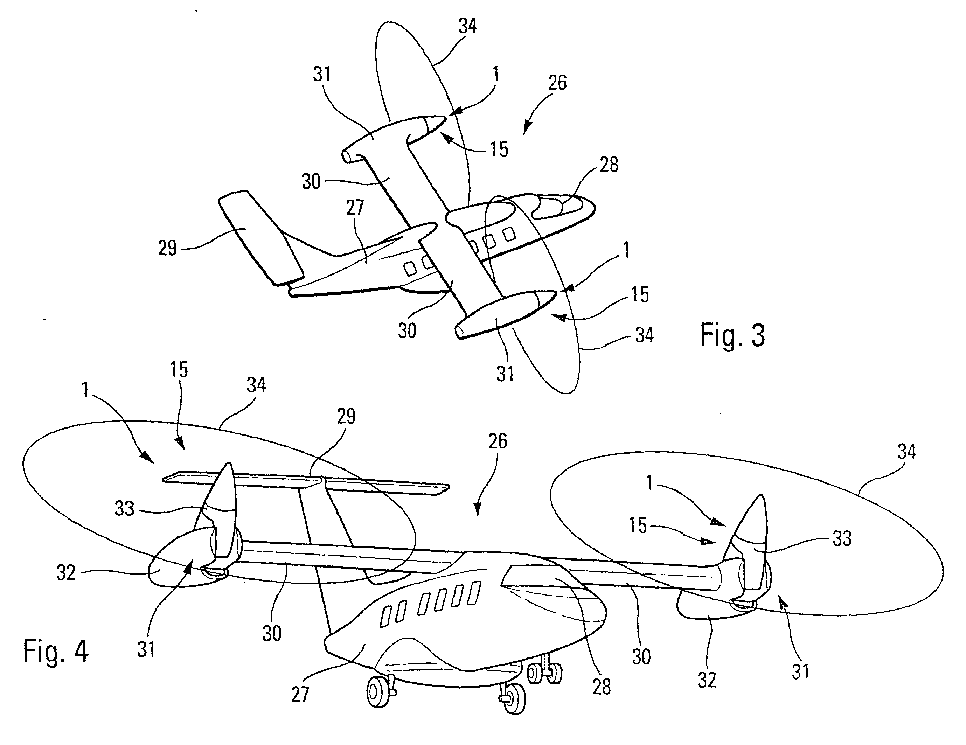

Un tel rotor basculant est prévu notamment sur un aéronef convertible 26 de type usuel, représenté sur les figures 3 et 4.

Cet aéronef convertible 26 comprend un fuselage d'avion 27, avec un poste de pilotage 28 à l'avant et un empennage en "T" 29 à l'arrière, et deux ailes hautes fixes 30 à flèche nulle et corde constante, avec une nacelle 31 fixée par la partie arrière 32 en bout de chacune des deux ailes 30 et s'étendant latéralement de chaque côté du fuselage 27.

Chaque nacelle 31 comporte une partie avant 33, profilée et montée basculante, par rapport à la partie arrière fixe 32 de la nacelle 31, et donc par rapport à l'aile 30 correspondante.

Dans chaque partie de nacelle avant basculante 33, un rotor 34 est monté de façon rotative et simultanément de façon à basculer avec la partie avant de nacelle 33 correspondante. Chaque rotor 34 comprend un mât non représenté relié pour son entraînement en rotation, par le système de transmission 15, à un moteur d'entraînement non représenté, qui est fixé dans la partie arrière 32 de la nacelle 31 correspondante.

Ledit aéronef convertible 26 est ainsi équipé de deux rotors basculants 34, pouvant chacun être basculé entre une configuration hélicoptère (figure 4), dans laquelle chaque rotor 34 est entraîné autour d'un axe de rotation sensiblement vertical, pour le fonctionnement de l'aéronef en mode hélicoptère, essentiellement pour le décollage, et une configuration avion (figure 3), dans laquelle chaque rotor 34 représente une hélice entraînée en rotation autour d'un axe sensiblement aligné avec la direction du vol, pour le fonctionnement de l'aéronef en mode avion, essentiellement pour le vol de croisière.

Par conséquent, grâce à l'invention, on réalise, de façon simple, fiable et peu encombrante, la lubrification des boîtes de transmission principales 2 associées auxdits rotors basculants 34, lubrification qui est complexe et difficile à mettre en oeuvre en raison du changement d'orientation, par rapport à la structure stable de l'aéronef 26, desdites boîtes de transmission 2 intégrées dans les parties de nacelle avant basculantes 33 correspondantes, en fonction des différentes phases de vol dudit aéronef 26.

## Revendications

1. Dispositif de lubrification d'une boîte de transmission de puissance (2) présentant une orientation variable et comprenant un espace fermé, ledit dispositif de lubrification (1) comportant :
- des moyens de lubrification (4) pour fournir du lubrifiant (L) à au moins un élément à lubrifier de ladite boîte de transmission (2) ; et
- un réservoir de récupération (6) pour récupérer du lubrifiant (L) dudit espace fermé,
**caractérisé en ce qu'**il comporte de plus :
- au moins une vis de vidange rotative (8) qui est réalisée sous forme d'une vis d'Archimède pourvue d'une pluralité d'orifices (12A, 12B, 12C, 12D) et qui est agencée dans ledit espace fermé, pour amener du lubrifiant (L) dudit espace fermé vers ledit réservoir de récupération (6) ; et
- des moyens d'entraînement (13) pour entraîner en rotation ladite vis de vidange (8),
et **en ce que** lesdits orifices (12A, 12B, 12C, 12D) sont pratiqués dans la vis de vidange (8) selon un agencement tel que ladite vis de vidange (8) puisse récupérer du lubrifiant (L) dudit espace fermé, quelle que soit l'orientation de ladite boîte de transmission (2).

2. Dispositif de lubrification selon la revendication 1, **caractérisé en ce que** ladite vis de vidange (8) est réalisée, au moins partiellement, en matériau synthétique.

3. Dispositif de lubrification selon l'une des revendications 1 et 2, **caractérisé en ce que** lesdits moyens d'entraînement (13) agissent sur ladite vis de vidange (8) au moyen d'engrenages (14) en matériau synthétique.

4. Système de transmission pour la transmission de puissance entre un moteur d'entraînement et un rotor basculant, qui est susceptible de basculer entre une première position, dans laquelle il est susceptible de fonctionner comme voilure tournante, et une seconde position, dans laquelle il est susceptible de fonctionner comme hélice, ledit système de transmission (15) comportant un ensemble réducteur basculant :
- qui est réalisé sous forme d'une boîte de transmission (2) ;
- qui est relié à un ensemble réducteur non-basculant lié à un arbre dudit moteur ; et
- qui assure l'entraînement dudit rotor,
**caractérisé en ce que** ladite boîte de transmission (15) de l'ensemble réducteur basculant comporte au moins un dispositif de lubrification (1) tel que celui spécifié sous l'une quelconque des revendications 1 à 3.

5. Aéronef convertible à rotors basculants, pouvant fonctionner en mode avion et en mode hélicoptère, et comprenant au moins un fuselage (27), une voilure fixe comportant au moins deux ailes (30) s'étendant latéralement de part et d'autre dudit fuselage (27), et, en mode hélicoptère, une voilure tournante comportant au moins deux rotors (34) qui servent d'hélices en mode avion, et dont chacun est monté basculant sur une aile fixe respective (30) et est relié, par un système de transmission respectif (15), à un moteur respectif supporté par l'aile correspondante (30),
**caractérisé en ce qu'**au moins l'un desdits systèmes de transmission (15) est tel que celui spécifié sous la revendication 4.

## Claims

1. Device for lubricating a power gearbox (2) having a variable orientation and comprising a closed space, the said lubricating device (1) comprising:
- lubricating means (4) for supplying lubricant (L) to at least one element of the said gearbox (2) that needs to be lubricated; and
- a collecting reservoir (6) for collecting the lubricant (L) from the said closed space,
**characterized in that**, in addition, it comprises:
- at least one rotary drain screw (8), which is produced in the form of an Archimedian screw, equipped with a number of orifices (12A, 12B, 12C, 12D) and which is arranged in the said closed space to convey lubricant (L) from the said closed space to the said collecting reservoir (6); and
- drive means (13) for driving the said drain screw (18) in rotation,
and **in that** the said orifices (12A, 12B, 12C, 12D) are made in the drain screw (8) in an arrangement such that the said drain screw can collect the lubricant (L) from the said closed space regardless of the orientation of the said gearbox (2).

2. Lubricating device according to Claim 1, **characterized in that** the said drain screw (8) is at least partially made of synthetic material.

3. Lubricating device according to either of Claims 1 and 2, characteri zed in that the said drive means (13) act on the said drain screw (8) by means of gears (14) made of synthetic material.

4. Transmission system for the transmission of power between a drive motor and a tilt rotor, which is capable of tilting between a first position in which it is capable of operating as a rotary wing, and a second position in which it is capable of operating as a propeller, the said transmission system (15) comprising a tilting reduction assembly:
- which is produced in the form of a gearbox (2);
- which is connected to a non-tilting reduction assembly connected to a shaft of the said motor; and
- which drives the said rotor,
**characterized in that** the said gearbox (15) of the tilting reduction assembly comprises at least one lubricating device (1) as specified in any one of Claims 1 to 3.

5. Convertible tilt-rotor aircraft capable of operating in airplane mode and in helicopter mode and comprising at least one fuselage (27), a fixed wing structure comprising at least two wings (30) extending laterally one on each side of the said fuselage (27) and, in helicopter mode, a rotary wing structure comprising at least two rotors (34) which in airplane mode act as propellers and each of which is mounted so that it can tilt on a respective fixed wing (30) and is connected, by a respective transmission system (15), to a respective motor supported by the corresponding wing (30) ,
**characterized in that** at least one of the said transmission systems (15) is as specified in claim 4.

## Patentansprüche

1. Vorrichtung zur Schmierung eines Getriebes zur Leistungsübertragung (2), welches eine veränderliche Orientierung aufweist und einen umschlossenen Raum umfasst, wobei die besagte Schmiervorrichtung (1) enthält:
- Mittel zur Durchführung der Schmierung (4), um Schmiermittel (L) mindestens einem zu schmierenden Bauteil des besagten Getriebes (2) zuzuführen; und
- ein Rückgewinnungsbehälter (6), um Schmiermittel (L) aus dem umschlossenen Raum rückzugewinnen,
**dadurch gekennzeichnet, dass** sie außerdem enthält:
- mindestens eine drehbare Entleerungsschraube (8), die in Form einer mit einer Anzahl von Löchern (12A, 12B, 12C, 12D) versehenen archimedischen Förderschnecke ausgebildet ist und die in dem besagten umschlossenen Raum untergebracht ist, um Schmiermittel (L) aus dem besagten umschlossenen Raum in Richtung auf den besagten Rückgewinnungsbehälter (6) zu fördern; und
- Antriebsmittel (13), um die besagte Entleerungsschraube (8) in Drehung zu versetzen,
und dadurch, dass die besagten Löcher (12A, 12B, 12C, 12D) in der Entleerungsschraube (8) dergestalt angeordnet sind, dass die besagte Entleerungsschraube Schmiermittel (L) aus dem besagten umschlossenen Raum rückgewinnen kann ungeachtet der Orientierung des besagten Getriebes (2).

2. Schmiervorrichtung nach Anspruch 1,
**dadurch gekennzeichnet, dass** die besagte Entleerungsschraube (8) wenigstens teilweise aus Kunststoff gefertigt ist.

3. Schmiervorrichtung nach einem der Ansprüche 1 und 2,
**dadurch gekennzeichnet, dass** die besagten Antriebsmittel (13) auf die besagte Entleerungsschraube (8) mittels Zahnradgetriebe (14) aus Kunststoff wirken.

4. Übertragungssystem zur Übertragung der Leistung zwischen einem Antriebsmotor und einem Schwenkrotor, welcher geeignet ist, zwischen einer ersten Stellung, in welcher er als Hubschraube funktionieren kann, und einer zweiten Stellung, in welcher er als Propeller funktionieren kann, zu schwenken, wobei das besagte Übertragungssystem (15) ein schwenkbares Untersetzungsaggregat enthält:
- welches in Form eines Getriebes (2) ausgebildet ist;
- welches mit einem nicht schwenkbaren Untersetzungsaggregat verbunden ist, das mit einer Welle des besagten Motors verbunden ist; und
- welches den Antrieb des besagten Rotors gewährleistet,
**dadurch gekennzeichnet, dass** das besagte Getriebe (15) des schwenkbaren Untersetzungsaggregats mindestens eine Schmiervorrichtung (1) aufweist wie eine solche, wie sie in einem beliebigen der Ansprüche 1 bis 3 festgelegt ist.

5. Wandelflugzeug mit Schwenkrotoren, welches im Flugzeugmodus und im Hubschraubermodus funktionieren kann und welches umfasst: mindestens einen Rumpf (27), ein feststehendes Tragwerk, welches mindestens zwei Tragflächen (30) aufweist, die sich beidseitig des besagten Rumpfes (27) erstrecken, und im Hubschraubermodus eine Hubschraube, welche mindestens zwei Rotoren (34) aufweist, die im Flugzeugmodus als Propeller wirken und von denen jeder schwenkbar an einer jeweils feststehenden Tragfläche (30) angebaut ist und über ein zugehöriges Übertragungssystem (15) mit einem zugehörigen Motor verbunden ist, der von der zugehörigen Tragfläche (30) getragen wird,
**dadurch gekennzeichnet, dass** mindestens eines der besagten Übertragungssysteme (15) ein solches System ist, wie es in Anspruch 4 festgelegt ist.
